# EUROPEAN PATENT APPLICATION

(11) **EP 4 026 727 A1**
(43) Date of publication of application: **13.07.2022**
(21) Application number: 21150511.0
(22) Date of filing: 07.01.2021
(51) Int. Cl.: B60L 53/60, B60L 53/67, H04B 3/54

(54) **CHARGING SYSTEM AND METHOD FOR OPERATING A CHARGING SYSTEM**

(71) Applicant: Vestel Elektronik Sanayi ve Ticaret A.S., 45030 Manisa (TR)
(72) Inventor: OEZVURAL, Goerkem, 45030 Manisa (TR)
(74) Representative: Kehl, Ascherl, Liebhoff & Ettmayr Patentanwälte Partnerschaft mbB

(57) **Abstract**

The present invention provides a charging system (100, 200) for providing electrical energy, the charging system (100, 200) comprising a number of charging stations (104, 108, 112, 204, 208, 212), each charging station (104, 108, 112, 204, 208, 212) comprising a number of electrical inputs (105, 106, 107, 109, 110, 111, 113, 114, 115, 205, 206, 207, 209, 210, 211, 213, 214, 215), each electrical input (105, 106, 107, 109, 110, 111, 113, 114, 115, 205, 206, 207, 209, 210, 211, 213, 214, 215) being configured to couple the respective charging station (104, 108, 112, 204, 208, 212) to a single one of a plurality of electrical phases (101, 102, 103, 201, 202, 203, 301) of the charging system (100, 200), and each charging station (104, 108, 112, 204, 208, 212) comprising a communication controller (116, 117, 118, 216, 217, 218, 316) coupled to the electrical inputs (105, 106, 107, 109, 110, 111, 113, 114, 115, 205, 206, 207, 209, 210, 211, 213, 214, 215) and configured to perform data communication via the respective electrical phases (101, 102, 103, 201, 202, 203, 301), and a main controller (125) coupled to the electrical phases (101, 102, 103, 201, 202, 203, 301) and configured to perform data communication via the electrical phases (101, 102, 103, 201, 202, 203, 301), wherein in a discovery mode the main controller (125) is configured to broadcast an ID request (131, 132, 133, 231, 232, 233) via the electrical phases (101, 102, 103, 201, 202, 203, 301) and to receive respective ID responses (134, 135, 136, 234, 235, 236) from the communication controllers (116, 117, 118, 216, 217, 218, 316) via the electrical phases (101, 102, 103, 201, 202, 203, 301), and wherein the communication controllers (116, 117, 118, 216, 217, 218, 316) are configured to receive the respective ID requests (131, 132, 133, 231, 232, 233) via the electrical phases (101, 102, 103, 201, 202, 203, 301) and to answer each one of the ID requests (131, 132, 133, 231, 232, 233) with a respective ID response (134, 135, 136, 234, 235, 236) via the electrical phase (101, 102, 103, 201, 202, 203, 301) on which the ID request (131, 132, 133, 231, 232, 233) was received. Further, the present invention provides a method for operating a charging system (100, 200).

## Description

### TECHNICAL FIELD

The invention relates to a charging system, especially for electrical vehicles, and to a method for operating such a charging system.

### BACKGROUND

Although applicable to any charging system with multiple power outlets or charging stations, the present invention will mainly be described in conjunction with a charging system for electrical vehicles.

In modern vehicles, for sake of reducing the exhaust emissions, the combustion engine may be supported by an electrical engine, e.g. as in (plug-in) hybrid vehicles, or may be replaced by an electrical engine, as in electrical vehicles.

In order to charge hybrid or electrical vehicles, respective charging system are provided, which allow charging one or more vehicles with electrical energy. Charging systems may e.g. be provided in private parking spaces or in public places, like e.g. gas stations or resting areas on highways or the like.

Charging systems are usually coupled to a mains network from which they receive electrical energy. The mains network may provide the charging system with electrical energy via a single phase, two phases, three phases or even more phases. However, usually three phases may be provided to the charging system from the mains network.

In order to effectively manage the load in the mains network, it is important to know, which charging units or charging stations of the charging system are connected to which phases of the mains network.

There exist different types of electric vehicles in the market which are capable of charging from 1-phase, 3-phase or even 2-phase supply. Each phase load may therefore differentiate between each other for a group of charging stations in a charging system. The phase connection mapping of charging stations therefore is an important information for the dynamic load management algorithms for charging electrical vehicles. This is especially the case, where there are electric vehicles capable of single-phase charging on charging stations which have a three-phase supply.

Usually phase sequence information is manually set by a technician e.g. via a kind of electromechanical DIP switches, or other configuration interfaces.

The phase connection sequence is an important setting for the health of the supply lines of the charging system and for the load management algorithms to be performed properly. Consequently, manually providing the phase connection sequence is generally not suitable. Due to human error or lack of attention erroneous settings may be provided, potentially causing technical failure in the electrical supply lines or degrading charging performance levels. Also, repair or service attempts to the charging system are prone problems resulting in erroneously documented phase connection sequences.

Accordingly, there is a need for simplifying the gathering of connection information for the single charging stations in charging systems.

### SUMMARY OF THE INVENTION

The above stated problem is solved by the features of the independent claims. It is understood, that independent claims of a claim category may be formed in analogy to the dependent claims of another claim category.

Accordingly, it is provided:
A charging system for providing electrical energy, the charging system comprising a number, i.e. one or more, of charging stations, each charging station comprising a number, i.e. one or more, of electrical inputs, each electrical input being configured to couple the respective charging station to a single one of a plurality of electrical phases of the charging system, and each charging station comprising a communication controller coupled to the electrical inputs and configured to perform data communication via the respective electrical phases, and a main controller coupled to the electrical phases and configured to perform data communication via the electrical phases, wherein in a discovery mode the main controller is configured to broadcast an ID request via the electrical phases and to receive respective ID responses from the communication controllers via the electrical phases, and wherein the communication controllers are configured to receive the respective ID requests via the electrical phases and to answer each one of the ID requests with a respective ID response via the electrical phase on which the ID request was received.

Further, it is provided:
A method for operating a charging system according to any one of the preceding claims, the method comprising in a discovery mode broadcasting an ID request by a main controller of the charging system via electrical phases of the charging system, receiving the respective ID requests via the electrical phases at communication controllers of charging stations of the charging system, answering by the respective communication controllers each one of the ID requests with a respective ID response via the electrical phase on which the ID request was received, and receiving the ID responses from the communication controllers via the electrical phases by the main controller.

The present invention is based on the finding that manual configuration of a charging system may be error prone and the quality depends on the individual technician performing the configuration.

The present invention therefore aims to provide an automated way of determining the phase configuration, also called phase connection mapping, of the single charging stations in a charging system. In this regard, the term charging station refers to a device that serves to charge one vehicle via a single charge connector or multiple vehicles via multiple charge connectors and is connected to at least one of the electrical phases of the charging system. The term charging system refers to the entirety of the charging stations, the main controller and the electrical phases that couple to the charging stations. The main controller is also coupled to the electrical phases for communication purpose.

The term electrical phase in this context refers to one power connection to an electrical input. Such an electrical phase may therefore e.g. comprise a power line and a ground line, a power line and a dedicated neutral line, or a power line and a neutral line that is shared between multiple electrical phases.

The charging system may be provided with electrical power via a mains network. A mains network that provides electrical power to the charging system may comprise only one electrical phase. However, usually the mains network may comprise two or three or even more electrical phases. Usually, the charging station will comprise the same number of electrical phases as the respective mains network. Usually the mains network and the charging system may comprise three phases.

It is understood that an interface or handover point between the mains network and the charging station may be explicitly defined, e.g. as an electromechanical interface or simply as a virtual handover point in the power lines. In the second alternative, the mains power lines may be connected to the charging stations, thereby forming the phases of the charging system.

To identify the phase configuration of the charging stations the present invention provides the single charging stations each with a communication controller and the central or main controller.

The communication controller in a charging station is coupled to all electrical inputs of that charging station, and therefore to all electrical phases that couple to the respective charging station. It is understood, that the charging stations may all be coupled to the same number of electrical phases, e.g. to three phases. However, it is also understood, that different charging stations may also be coupled to a different number of electrical phases. In a charging system for example charging stations coupled to a single electrical phase may be combined with charging stations coupled to two phases and/or with charging stations coupled to three phases. It is understood, that the charging stations may comprise a number of electrical inputs corresponding to the number of phases they are connected to.

In the charging stations, a single communication processor may be provided with respective physical interfaces to couple communication signals into and out of the respective phases. As alternative, the communication controller may comprise a dedicated communication processor with a respective physical interface for every single electrical input. It is understood, that the communication controller may comprise hardware, software or a combination of both hardware and software to implement the respective communication capabilities. Further, the function of the communication controller may also be incorporated at least in part into any other controller or processor present in the respective charging station. Therefore, a charging station may also comprise a central processor or controller that performs e.g. control of the charging process of the vehicle and also performs the functions of the communication controller that may be implemented in the central processor or controller.

The main controller may be a dedicated controller. As alternative, the main controller may also be implemented in one of the charging stations. In such a charging station the main controller replaces the communication controller. It is understood, that the main controller may comprise hardware, software or a combination of both hardware and software to implement the respective communication capabilities. Further, the function of the main controller may also be incorporated at least in part into any other controller or processor present in the respective charging station. Therefore, a charging station may also comprise a central processor or controller that performs e.g. control of the charging process of the vehicle and also performs the functions of the main controller that may be implemented in the central processor or controller.

Determining the phase configuration of the single charging stations is initiated by the main controller. To this end, the main controller broadcasts an ID request via each of the electrical phases. The single communication controllers then answer the ID request at least via the electrical phase on which the ID request is received with a respective ID response.

By collecting the ID responses from the single communication controllers, the main controller is capable of identifying which one of the phases is connected to which input of each one of the charging stations.

With the present invention it is therefore possible to automatically and reliably identify the phase configuration of multiple charging stations in a charging system. This information may then be provided from the main controller to the operator of the mains power network and/or may be used by load management and load distribution algorithms in the charging system.

To be able to control the loads and balance the loads on the phase lines of a mains network, the prerequisite is knowing the phase connection mapping of the load points. With the present invention the load management device and / or the load management software know to which phase lines each charging point is connected. The loads may therefore be dynamically regulated with the best possible utilization level or the best possible efficiency.

Further embodiments of the present invention are subject of the further dependent claims and of the following description, referring to the drawings.

In an embodiment, each one of the communication controllers and the main controller may comprise a power line communication, PLC, interface configured to couple to the respective electrical phase via the respective electrical input, and configured to receive the ID request via a PLC based data communication and to transmit the ID response via a PLC based data communication.

A power line communication or PLC interface is a data interface that is capable of coupling data signals into and out of a power line. Such a PLC interface may e.g. comprise a baseband processor that is coupled to a modulator/demodulator. The modulator/demodulator may be coupled to the signal coupler. It is understood, that the baseband processor and the modulator/demodulator may be provided as hardware, software or a combination of hardware and software. For example, the modulator/demodulator may be provided as a circuit comprising mixers and filters in the receiving and transmitting signal paths also called RX signal path and TX signal path. The baseband processor may e.g. comprise a hardware circuit with a processor and respective analog-to-digital converters or digital-to-analog converters and a memory comprising a respective firmware or program instructions that allow the baseband processor to perform PLC communication when the firmware or program instructions are executed by the processor. The signal coupler may e.g. be provided in the form of a coupling transformer.

It is understood, that any type of PLC interface that is adequate for communication via the power lines in the charging system may be used.

In another embodiment, the communication controllers may each be configured to include in the ID response an ID of the respective charging station and an indication of the electrical phase via which the ID request is received.

The ID response may be provided from the communication controllers to the main controller with specific data about the respective charging station, e.g. an ID, and its connection to the electrical phases of the charging station, e.g. the phases that received the ID request.

The ID of the respective charging station identifies a charging station and is usually unique. The ID may be any type of ID, e.g. an ID that is predetermined during manufacturing of the charging station, e.g. a serial number or an ID based on a serial number. As alternative, the ID may be user-editable. In this case, an ID collision algorithm may be implemented in the charging system, e.g. by transmitting a user-provided ID to all other charging stations via the electrical phases or by storing the user-provided IDs in the main controller and verifying with the stored IDs that no ID is used twice.

The information about the electrical phase via which the ID request is received may e.g. simply indicate the electrical input(s) of the charging station on which the ID request is received. To this end, the electrical inputs may be numerated as 1 or first, 2 or second, 3 or third, and so on.

The ID response may e.g. comprise information of the type ID:X, P:Y, where "ID:" refers to the ID of the charging station and "P:" to the electrical phase.

If for example, charging station with ID 1 in a charging system receives an ID request via the first electrical input, the ID response may for example comprise ID:1, P:1. If the same charging station receives the ID request via the third electrical input, the ID response may comprise ID:1, P:3. Consequently, if a charging station with ID 5 receives the ID request via the second electrical input, the response will comprise ID:5, P:2.

It is understood, that the above-presented human-readable format of the ID response may in embodiments also be replaced by a digital, binary or machine-readable format. For example, instead of strings, only number may be transmitted in the charging system between the main controller and the charging controllers. In fact, any adequate data format may be used.

In a further embodiment, the main controller may configure to broadcast the ID request via the electrical phases sequentially via a single one of the electrical phases at a time and to receive the ID responses prior to broadcasting the ID request via the next one of the electrical phases.

The main controller may query the single electrical phases sequentially one at a time. This means, that the ID request is only transmitted over a single electrical phase at any time. The main controller may then wait until a response from all charging stations that are connected to the respective electrical phase is received. Only after all ID responses are received, will the main controller proceed to transmit the ID request via the next electrical phase.

A sequential phase-wise ID determination may easily be implemented with an algorithm of little complexity since response are only received for a single electrical phase each time.

In this embodiment, ID response may be received via any one of the electrical phases, since in the main controller it is known for which electrical phase the ID response are expected.

In another embodiment, the main controller may be configured to broadcast the ID request via all of the electrical phases at the same time.

As alternative to sequentially requesting ID responses for every single electrical phase, the main controller may also request the ID responses from all charging stations and for all electrical phases at the same time.

To this end, the main controller transmits the ID request via all electrical phases at the same time. The communication controllers may then answer the ID request.

In order to simplify separation or differentiation of the single ID responses, the ID requests may e.g. comprise an indication of the electrical phase on which they are transmitted.

The charging stations may then incorporate the information from the ID requests in the ID responses and in addition provide the charging station ID and the indication of the electrical input that received the ID request. This allows querying all electrical phases at the same time.

For example, if an ID request is sent on electrical phase 1, the ID request may comprise this information, P_TX:1. If this ID request is received by charging station 5 via electrical input 3, the corresponding ID response will comprise P_TX:1, ID:5, P:3.

After receiving this information, it is therefore known at the main controller that electrical phase 1, as defined in the main controller, is connected to electrical input 3, which is equivalent to phase 3, of the charging station with ID 5.

In an embodiment, each one of the communication controllers may be configured to transmit the ID response via the electrical phase via which the ID request is received.

If the ID responses are only transmitted from the communication controllers to the main controller via the electrical phase via which they are received, neither the sequential transmission of the ID request via the single electrical phases nor the transmission of a phase ID in the ID request is necessary.

The main controller in this embodiment may transmit the ID request at the same time on all electrical phases. The ID responses may then include only the ID of the respective charging station and the number of the respective electrical input.

In the main controller the electrical phase via which the ID request was transmitted is the same electrical phase, via which the respective ID response is received.

It is understood, that if sequential transmission of the ID request via the single electrical phases or the transmission of a phase ID in the ID request is implemented, the communication controllers may send the ID response via all electrical phases to which the respective communication controller or charging station is coupled via the electrical inputs.

In a further embodiment, the charging system may comprise a load balancer. The load balancer may be coupled to or integrated into the main controller, and the load balancer may be configured to balance during a charging operation in the charging system the electrical loads of the charging stations based on the ID responses received by the main controller.

When all the ID responses are received from the charging stations, the main controller completes the automatic discovery of the phase connection sequence of the single charging stations.

In order to make use of this information, a load balancer in the charging system may use the gathered information in load management algorithms that are used to control the loads in the charging stations.

If for example, two charging stations are each coupled to three electrical phases and are each charging a vehicle via a single phase, the load balancer could control the charging stations to draw the electrical energy via different electrical phases.

It is understood, that the load balancer may be implemented as hardware, software or a combination therefore. The load balancer may e.g. be provided as a processor comprising a memory with executable instructions, that when executed by the processor cause the processor to perform the load balancing of the charging stations. It is understood, that the hardware may further include any required type of interface, e.g. communication interface or the like.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a charging system according to the present invention;
Fig. 2 shows a flow diagram of an embodiment of a method according to the present invention;
Fig. 3 shows a block diagram of an embodiment of a charging system according to the present invention;
Fig. 4 shows a block diagram of an embodiment of a communication controller according to the present invention; and
Fig. 5 shows a diagram of a sequence of acquiring the phase configuration in an embodiment of a charging system according to the present invention.

In the figures like reference signs denote like elements unless stated otherwise.

### DETAILED DESCRIPTION OF THE DRAWINGS

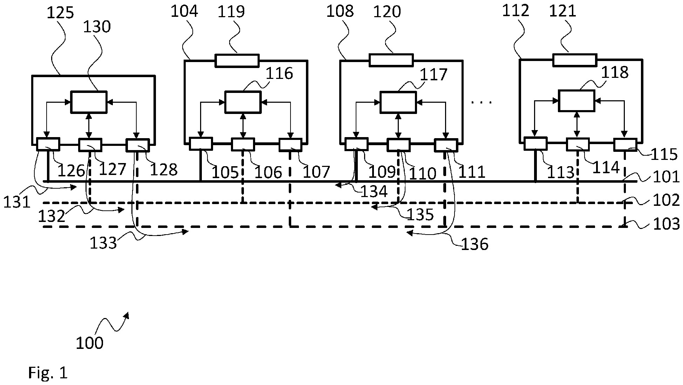

Fig. 1 shows a block diagram of a charging system 100 for providing electrical energy for example to electrical or hybrid electrical vehicles.

The charging system 100 comprises a number of charging stations 104, 108, 112. It is understood, that although three charging stations 104, 108, 112 are shown, any number of charging stations starting with one may be present in the charging system 100, as indicated by three dots.

Each charging station 104, 108, 112 of the charging system 100 comprises three electrical inputs 105, 106, 107, 109, 110, 111, 113, 114, 115, wherein each electrical input 105, 106, 107, 109, 110, 111, 113, 114, 115 is coupled to one of three electrical phases 101, 102, 103 of the charging system 100. It is understood, that the number of three electrical phases 101, 102, 103 is just exemplarily chosen and that the charging system 100 may comprise more or less electrical phases in other embodiments. Further, although all three charging stations 104, 108, 112 comprise three electrical inputs 105, 106, 107, 109, 110, 111, 113, 114, 115, in other embodiments, charging stations with one or two or more electrical inputs may be present.

Each charging station 104, 108, 112 comprises a communication controller 116, 117, 118 coupled to the electrical inputs 105, 106, 107, 109, 110, 111, 113, 114, 115 for perform ing data communication via the respective electrical phases 101, 102, 103. The charging stations 104, 108, 112 each comprise an exemplary charging connector 119, 120, 121. It is understood, that a single charging station 104, 108, 112 may comprise more than one charging connector 119, 120, 121 in other embodiments.

In the charging system 100 a main controller 125 is coupled via three electrical inputs 126, 127, 128 to the three electrical phases 101, 102, 103 for performing data communication via the electrical phases 101, 102, 103. To this end, main controller 125 also comprises a communication controller 130 that is coupled to the three electrical inputs 126, 127, 128.

In a discovery mode the main controller 125, e.g. the communication controller 130, broadcasts an ID request 131, 132, 133 via the electrical phases 101, 102, 103. The communication controllers 116, 117, 118 receive the respective ID requests 131, 132, 133 via the electrical phases 101, 102, 103 and answer each one of the ID requests 131, 132, 133 with a respective ID response 134, 135, 136 at least via the electrical phase 101, 102, 103 on which the ID request 131, 132, 133 was received.

The main controller 125 receives the ID responses 134, 135, 136 from the communication controllers 116, 117, 118 via the electrical phases 101, 102, 103, and stores the responses or respective phase configuration information for the charging stations 104, 108, 112 e.g. in a memory, that is not explicitly shown. The main controller 125 may also forward the ID responses or the phase configuration information to another entity, like e.g. a load balancer of the charging system 100 or the like. In an embodiment, the main controller 125 may e.g. be implemented in a load balancer or may in addition implement the function of a load balancer.

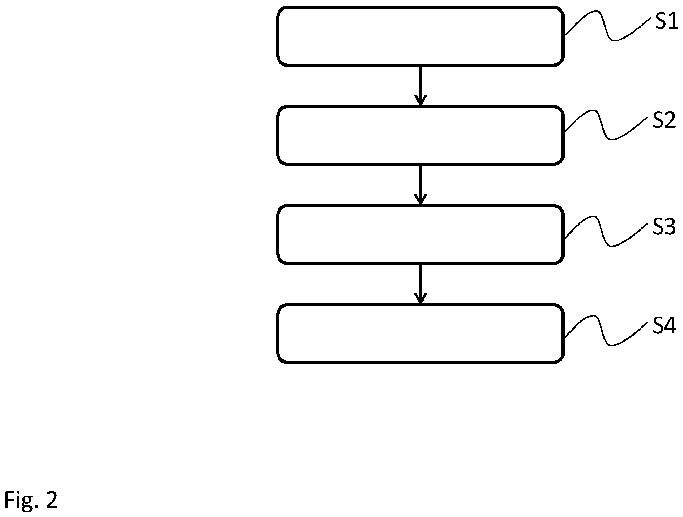

For sake of clarity in the following description of the method-based Fig. 2 the reference signs used above in the description of apparatus-based Figs. 1 and 3 to 5 will be maintained.

Fig. 2 shows a flow diagram of method for operating a charging system 100.

The method comprises in a discovery mode broadcasting S1 an ID request 131, 132, 133, 231, 232, 233 by a main controller 125 of the charging system 100, 200 via electrical phases 101, 102, 103, 201, 202, 203, 301 of the charging system 100, 200, receiving S2 the respective ID requests 131, 132, 133, 231, 232, 233 via the electrical phases 101, 102, 103, 201, 202, 203, 301 at communication controllers 116, 117, 118, 216, 217, 218, 316 of charging stations 104, 108, 112, 204, 208, 212 of the charging system 100, 200, answering S3 by the respective communication controllers 116, 117, 118, 216, 217, 218, 316 each one of the ID requests 131, 132, 133, 231, 232, 233 with a respective ID response 134, 135, 136, 234, 235, 236 at least via the electrical phase 101, 102, 103, 201, 202, 203, 301 on which the ID request 131, 132, 133, 231, 232, 233 was received, and receiving S4 the ID responses 134, 135, 136, 234, 235, 236 from the communication controllers 116, 117, 118, 216, 217, 218, 316 via the electrical phases 101, 102, 103, 201, 202, 203, 301 by the main controller 125.

The communication between the communication controllers 116, 117, 118, 216, 217, 218, 316 and the main controller 125 may for example be performed as power line, PLC, communication via the electrical phases 101, 102, 103, 201, 202, 203, 301.

When broadcasting the main controller 125 may broadcast the ID request 131, 132, 133, 231, 232, 233 via the electrical phases 101, 102, 103, 201, 202, 203, 301 sequentially via a single one of the electrical phases 101, 102, 103, 201, 202, 203, 301 at a time. The main controller 125 may receive the respective ID responses 134, 135, 136, 234, 235, 236 prior to broadcasting the ID request 131, 132, 133, 231, 232, 233 via the next one of the electrical phases 101, 102, 103, 201, 202, 203, 301.

When sending an ID response 134, 135, 136, 234, 235, 236, the communication controllers 116, 117, 118, 216, 217, 218, 316 may include in the ID response 134, 135, 136, 234, 235, 236 an ID of the respective charging station 104, 108, 112, 204, 208, 212 and an indication of the electrical phase 101, 102, 103, 201, 202, 203, 301 via which the ID request 131, 132, 133, 231, 232, 233 is received.

When broadcasting the main controller 125 may also broadcast the ID request 131, 132, 133, 231, 232, 233 via all of the electrical phases 101, 102, 103, 201, 202, 203, 301 at the same time. When answering the ID request 131, 132, 133, 231, 232, 233 each one of the communication controllers 116, 117, 118, 216, 217, 218, 316 may transmit the ID response 134, 135, 136, 234, 235, 236 only via the electrical phase 101, 102, 103, 201, 202, 203, 301 via which the ID request 131, 132, 133, 231, 232, 233 is received.

The method may further comprise balancing during a charging operation in the charging system 100, 200 the electrical loads of the charging stations 104, 108, 112, 204, 208, 212 based on the ID responses 134, 135, 136, 234, 235, 236 received by the main controller 125.

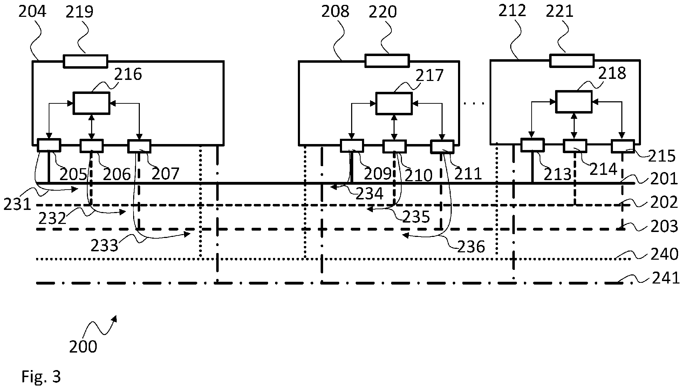

Fig. 3 shows a block diagram of a charging system 200. The charging system 200 is based on charging system 100 in that the charging system 200 also comprises a number of charging stations 204, 208, 212. It is understood, that although three charging stations 204, 208, 212 are shown, any number of charging stations starting with one may be present in the charging system 200, as indicated by three dots.

Each charging station 204, 208, 212 of the charging system 200 comprises three electrical inputs 205, 206, 207, 209, 210, 211, 213, 214, 215, wherein each electrical input 205, 206, 207, 209, 210, 211, 213, 214, 215 is coupled to one of three electrical phases 201, 202, 203 of the charging system 200. It is understood, that the number of three electrical phases 201, 202, 203 is just exemplarily chosen and that the charging system 200 may comprise more or less electrical phases in other embodiments. Further, although all three charging stations 204, 208, 212 comprise three electrical inputs 205, 206, 207, 209, 210, 211, 213, 214, 215, in other embodiments, charging stations with one or two or more electrical inputs may be present.

In addition, the single charging stations 204, 208, 212 are each coupled to a neutral line 240 and to a ground line 241. The term electrical phase 201, 202, 203 in this regard may refer to a respective power line and either the neutral line 240 or the ground line 241. Signal transmission may therefore, e.g. be performed via two lines, the respective power line and either the neutral line 240 or the ground line 241 in each case.

Each charging station 204, 208, 212 comprises a communication controller 216, 217, 218 coupled to the electrical inputs 205, 206, 207, 209, 210, 211, 213, 214, 215 for performing data communication via the respective electrical phases 201, 202, 203. The charging stations 204, 208, 212 each comprise an exemplary charging connector 219, 220, 221. It is understood, that a single charging station 204, 208, 212 may comprise more than one charging connector 219, 220, 221 in other embodiments.

In the charging system 200 no dedicated main controller is shown. Instead, the functions of the main controller are implemented by one of the communication controllers 216, 217, 218, e.g. by communication controller 216.

In this embodiment of the communication controller 216, for example a firmware, program or computer executable instructions in a memory of the communication controller 216 may be amended to include the functions of transmitting the ID requests and receiving the ID responses. It is understood, that the hardware of the communication controller 216 and the communication controllers 217, 218 may be identical. If required, the communication controller 216 may comprise a larger memory for storing the program instructions for the additional functions.

The communication controller 216 may perform the tasks of the main controller transparently. This means, that in communication controllers 217, 218 the ID requests from communication controller 216 seem to originate in a main controller and the ID responses may be sent from the communication controllers 217, 218 to the communication controller 216 as to any other main controller according to the present invention.

The charging station 204, 208, 212 that comprises the main controller, in this case charging station 204, may also be called the "master station" or the like.

It is understood, that the master station may comprise any other interface, e.g. communication interface, that may be required to forward the information about the phase configuration of the charging stations 204, 208, 212 to other entities, like e.g. a load balancer or a central load manager of the mains network. Such a communication interface may e.g. be a wired or wireless data network interface.

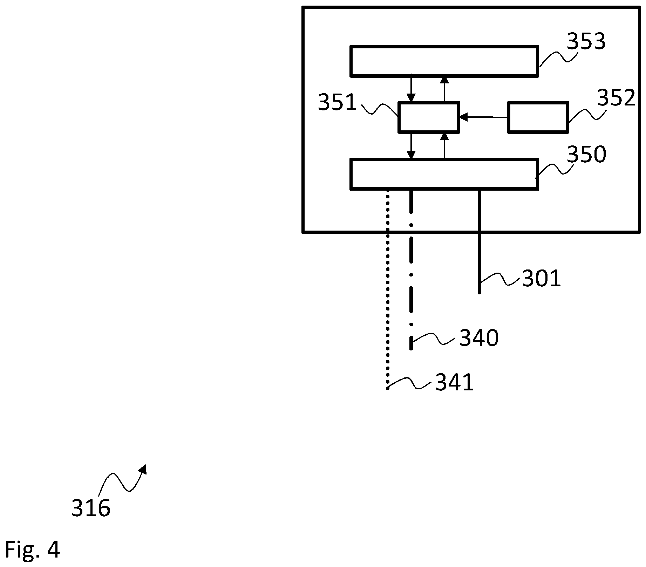

Fig. 4 shows a block diagram of a communication controller 316. The communication controller 316 is exemplarily coupled to an electrical phase 301. It is understood, that the communication controller 316 may be coupled to other electrical phases or to more than one electrical phases. In this case at least some of the parts of the communication controller 316 may be duplicated for each phase.

The communication controller 316 comprises a signal coupler 350 that is coupled to the electrical phase 301. Further, the signal coupler 350 is in this example coupled to the neutral line 340 and the ground line 341. It is understood, that the signal coupler may also be coupled to the neutral line 340 or the ground line 341 only . The signal coupler 350 may be provided for every electrical phase that the communication controller 316 is coupled to. The signal coupler 350 may for example be provided in the form of a coupling transformer.

Connected to the signal coupler 250 a modulator/demodulator 351 is provided, with an oscillator 352 attached to the modulator/demodulator 351. The modulator/demodulator 351 may be provided for every electrical phase that the communication controller 316 is coupled to.

Further, a baseband processor 353 is coupled to the modulator/demodulator 351. It is understood, that the baseband processor 353 may be provided for every electrical phase that the communication controller 316 is coupled to. As alternative, a single baseband processor 353 may be provided for multiple electrical phases.

It is understood, that the components of the communication controller 316 may be provided as hardware, software or combination of both. Further components of the communication controller 316 may also be provided as programmable logic devices, like e.g. FPGAs, CPLDs or the like. Further, at least some of the components of the communication controller 316 may be provided in a single component, for example, the modulator/demodulator 351, the oscillator 352 and the baseband processor 353 may e.g. be provided in a microcontroller or in a FPGA or CPLD.

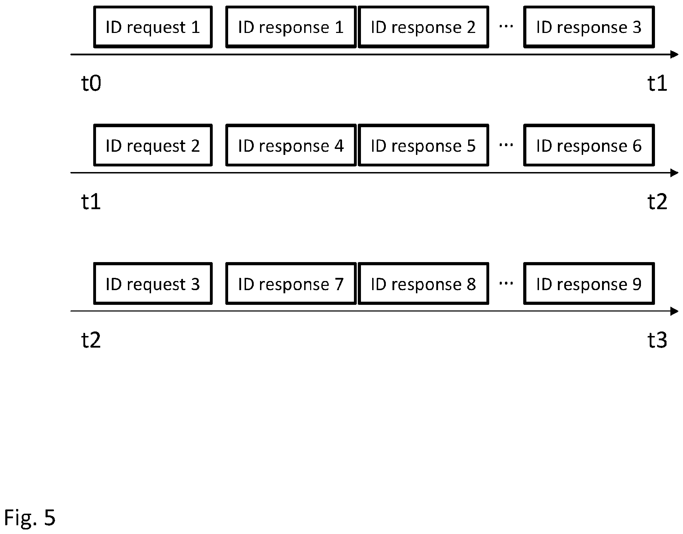

Fig. 5 shows a diagram of a sequence of acquiring the phase configuration in an embodiment of a charging system.

In the diagram of Fig. 5 a time line is shown, from t0 to t3. Three phases are depicted, one from t0 to t1, one from t1 to t2 and one from t2 to t3. Every phase is used to discover the configuration on a single electrical phase of a charging system.

Starting at t0, a main controller transmits an ID request for the first phase, "ID request 1", of a charging system. This first ID request indicates to the charging stations that an ID response is requested from all charging stations that receive the ID request via the first electrical phase. The ID request 1 is answered with ID responses by all relevant charging stations, i.e. by charging stations that are coupled to said first phase, here exemplary ID response 1, ID response 2, ID response 3. Three dots indicate that more are less ID responses are possible, depending on the number of charging stations that receive the first ID request 1.

Each of the ID responses comprises at least an ID of the respective charging station. Since the phase between t0 and t1 is reserved for the first electrical phase, no indication of the first electrical phase of the charging system needs to be included in the ID responses. However, a further information that may be included in the ID response is an information about the electrical input of the respective charging station that received the ID request. For example, a charging station may receive an ID request for the first electrical phase on the second electrical input, which means, that the charging station is coupled to the first electrical phase via the second electrical input.

After receiving all responses for the first ID request, i.e. the first phase, the main controller may repeat the procedure for the second phase by transmitting the second ID request 2 via the second electrical phase. Again, the single charging stations that receive the second ID request 2, answer the ID request 2 with respective ID responses 4, 5 and 6. Again, three ID responses are only exemplarily shown and more or less are possible.

After receiving all ID responses for the second ID request 2, at time t2 the main controller may repeat the procedure for the third phase by transmitting a third ID request 3 to the single charging stations. The single charging stations that receive the third ID request 3, answer the ID request 3 with respective ID responses 7, 8 and 9. Again, three ID responses are only exemplarily shown and more or less are possible.

It is understood, that the main controller may apply a timeout while waiting for the ID responses. This means, that the time between t0 and t1, t1 and t2 or t2 and t3 may be a fixed amount of time.

Further, it is also understood, that the power line communication or any other communication system used, may provide an arbitration between messages of the single charging stations.

The example of Fig. 5 is shown for three electrical phases in a charging system. If less phases are present in a charging system, less phases will be required to query all charging stations and all electrical phases. In contrast, if more than three phases are present, more phases will be required.

As alternative to the broadcasting of the ID request, a dedicated querying system may be used, where the main controller queries every single charging station.

The information gathered during the discovery process on tabular form may be presented for example as follows:

| **Slave ID** | **Phase 1** | **Phase 2** | **Phase 3** |
|---|---|---|---|
| 1 | Input 2 | Input 1 | Input 3 |
| 2 | Input 1 | Input 2 | Input 3 |
| . | . | . | . |
| . | . | . | . |
| N | Input 3 | Input 1 | Input 2 |

It is understood, that the exact content of the table may differ for every charging system and that the above-presented table is just exemplarily shown.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a charging system for providing electrical energy, the charging system comprising a number of charging stations, each charging station comprising a number of electrical inputs, each electrical input being configured to couple the respective charging station to a single one of a plurality of electrical phases of the charging system, and each charging station comprising a communication controller coupled to the electrical inputs and configured to perform data communication via the respective electrical phases, and a main controller coupled to the electrical phases and configured to perform data communication via the electrical phases, wherein in a discovery mode the main controller is configured to broadcast an ID request via the electrical phases and to receive respective ID responses from the communication controllers via the electrical phases, and wherein the communication controllers are configured to receive the respective ID requests via the electrical phases and to answer each one of the ID requests with a respective ID response via the electrical phase on which the ID request was received. Further, the present invention provides a method for operating a charging system.

### List of reference signs

- 100, 200: charging system
- 101, 102, 103, 201, 202, 203, 301: electrical phase
- 104, 108, 112, 204, 208, 212: charging station
- 105, 106, 107, 109, 110, 111, 113, 114, 115: electrical input
- 205, 206, 207, 209, 210, 211, 213, 214, 215: electrical input
- 116, 117, 118, 216, 217, 218, 316: communication controller
- 119, 120, 121, 219, 220, 221: charging connector

- 125: main controller
- 126, 127, 128: electrical input

- 130: communication controller
- 131, 132, 133, 231, 232, 233: ID request
- 134, 135, 136, 234, 235, 236: ID response

- 240, 340: neutral
- 241,341: ground

- 350: signal coupler
- 351: modulator/demodulator
- 352: oscillator
- 353: baseband processor

## Claims

1. Charging system (100, 200) for providing electrical energy, the charging system (100, 200) comprising:
a number of charging stations (104, 108, 112, 204, 208, 212), each charging station (104, 108, 112, 204, 208, 212) comprising a number of electrical inputs (105, 106, 107, 109, 110, 111, 113, 114, 115, 205, 206, 207, 209, 210, 211, 213, 214, 215), each electrical input (105, 106, 107, 109, 110, 111, 113, 114, 115, 205, 206, 207, 209, 210, 211, 213, 214, 215) being configured to couple the respective charging station (104, 108, 112, 204, 208, 212) to a single one of a plurality of electrical phases (101, 102, 103, 201, 202, 203, 301) of the charging system (100, 200), and each charging station (104, 108, 112, 204, 208, 212) comprising a communication controller (116, 117, 118, 216, 217, 218, 316) coupled to the electrical inputs (105, 106, 107, 109, 110, 111, 113, 114, 115, 205, 206, 207, 209, 210, 211, 213, 214, 215) and configured to perform data communication via the respective electrical phases (101, 102, 103, 201, 202, 203, 301), and
a main controller (125) coupled to the electrical phases (101, 102, 103, 201, 202, 203, 301) and configured to perform data communication via the electrical phases (101, 102, 103, 201, 202, 203, 301),
wherein in a discovery mode the main controller (125) is configured to broadcast an ID request (131, 132, 133, 231, 232, 233) via the electrical phases (101, 102, 103, 201, 202, 203, 301) and to receive respective ID responses (134, 135, 136, 234, 235, 236) from the communication controllers (116, 117, 118, 216, 217, 218, 316) via the electrical phases (101, 102, 103, 201, 202, 203, 301), and
wherein the communication controllers (116, 117, 118, 216, 217, 218, 316) are configured to receive the respective ID requests (131, 132, 133, 231, 232, 233) via the electrical phases (101, 102, 103, 201, 202, 203, 301) and to answer each one of the ID requests (131, 132, 133, 231, 232, 233) with a respective ID response (134, 135, 136, 234, 235, 236) via the electrical phase (101, 102, 103, 201, 202, 203, 301) on which the ID request (131, 132, 133, 231, 232, 233) was received.

2. Charging system (100, 200) according to claim 1, wherein each one of the communication controllers (116, 117, 118, 216, 217, 218, 316) and the main controller (125) comprises a power line communication, PLC, interface configured to couple to the respective electrical phase (101, 102, 103, 201, 202, 203, 301) via the respective electrical input (105, 106, 107, 109, 110, 111, 113, 114, 115, 205, 206, 207, 209, 210, 211, 213, 214, 215), and configured to receive the ID request (131, 132, 133, 231, 232, 233) via a PLC based data communication and to transmit the ID response (134, 135, 136, 234, 235, 236) via a PLC based data communication.

3. Charging system (100, 200) according to any one of the preceding claims, wherein the communication controllers (116, 117, 118, 216, 217, 218, 316) are each configured to include in the ID response (134, 135, 136, 234, 235, 236) an ID of the respective charging station (104, 108, 112, 204, 208, 212) and an indication of the electrical phase (101, 102, 103, 201, 202, 203, 301) via which the ID request (131, 132, 133, 231, 232, 233) is received.

4. Charging system (100, 200) according to any one of the preceding claims, wherein the main controller (125) is configured to broadcast the ID request (131, 132, 133, 231, 232, 233) via the electrical phases (101, 102, 103, 201, 202, 203, 301) sequentially via a single one of the electrical phases (101, 102, 103, 201, 202, 203, 301) at a time and to receive the ID responses (134, 135, 136, 234, 235, 236) prior to broadcasting the ID request (131, 132, 133, 231, 232, 233) via the next one of the electrical phases (101, 102, 103, 201, 202, 203, 301).

5. Charging system (100, 200) according to any one of the preceding claims 1 to 3, wherein the main controller (125) is configured to broadcast the ID request (131, 132, 133, 231, 232, 233) via all of the electrical phases (101, 102, 103, 201, 202, 203, 301) at the same time.

6. Charging system (100, 200) according to claim 4 or 5, wherein each one of the communication controllers (116, 117, 118, 216, 217, 218, 316) is configured to transmit the ID response (134, 135, 136, 234, 235, 236) via the electrical phase (101, 102, 103, 201, 202, 203, 301) via which the ID request (131, 132, 133, 231, 232, 233) is received.

7. Charging system (100, 200) according to any one of the preceding claims, comprising a load balancer, wherein the load balancer is coupled to or integrated into the main controller (125), and wherein the load balancer is configured to balance during a charging operation in the charging system (100, 200) the electrical loads of the charging stations (104, 108, 112, 204, 208, 212) based on the ID responses (134, 135, 136, 234, 235, 236) received by the main controller (125).

8. Method for operating a charging system (100, 200) according to any one of the preceding claims, the method comprising:
in a discovery mode broadcasting (S1) an ID request (131, 132, 133, 231, 232, 233) by a main controller (125) of the charging system (100, 200) via electrical phases (101, 102, 103, 201, 202, 203, 301) of the charging system (100, 200),
receiving (S2) the respective ID requests (131, 132, 133, 231, 232, 233) via the electrical phases (101, 102, 103, 201, 202, 203, 301) at communication controllers (116, 117, 118, 216, 217, 218, 316) of charging stations (104, 108, 112, 204, 208, 212) of the charging system (100, 200),
answering (S3) by the respective communication controllers (116, 117, 118, 216, 217, 218, 316) each one of the ID requests (131, 132, 133, 231, 232, 233) with a respective ID response (134, 135, 136, 234, 235, 236) via the electrical phase (101, 102, 103, 201, 202, 203, 301) on which the ID request (131, 132, 133, 231, 232, 233) was received, and
receiving (S4) the ID responses (134, 135, 136, 234, 235, 236) from the communication controllers (116, 117, 118, 216, 217, 218, 316) via the electrical phases (101, 102, 103, 201, 202, 203, 301) by the main controller (125).

9. Method according to claim 8, wherein communication between the communication controllers (116, 117, 118, 216, 217, 218, 316) and the main controller (125) is performed as power line, PLC, communication via the electrical phases (101, 102, 103, 201, 202, 203, 301).

10. Method according to any one of the preceding claims 8 and 9, wherein when sending an ID response (134, 135, 136, 234, 235, 236), the communication controllers (116, 117, 118, 216, 217, 218, 316) include in the ID response (134, 135, 136, 234, 235, 236) an ID of the respective charging station (104, 108, 112, 204, 208, 212) and an indication of the electrical phase (101, 102, 103, 201, 202, 203, 301) via which the ID request (131, 132, 133, 231, 232, 233) is received.

11. Method according to any one of the preceding claims 8 to 10, wherein when broadcasting the main controller (125) broadcasts the ID request (131, 132, 133, 231, 232, 233) via the electrical phases (101, 102, 103, 201, 202, 203, 301) sequentially via a single one of the electrical phases (101, 102, 103, 201, 202, 203, 301) at a time and receives the ID responses (134, 135, 136, 234, 235, 236) prior to broadcasting the ID request (131, 132, 133, 231, 232, 233) via the next one of the electrical phases (101, 102, 103, 201, 202, 203, 301).

12. Method according to any one of the preceding claims 8 to 10, wherein when broadcasting the main controller (125) broadcasts the ID request (131, 132, 133, 231, 232, 233) via all of the electrical phases (101, 102, 103, 201, 202, 203, 301) at the same time.

13. Method according to claim 11 or 12, wherein when answering each one of the communication controllers (116, 117, 118, 216, 217, 218, 316) transmit the ID response (134, 135, 136, 234, 235, 236) via the electrical phase (101, 102, 103, 201, 202, 203, 301) via which the ID request (131, 132, 133, 231, 232, 233) is received.

14. Method according to any one of the preceding claims 8 to 13, comprising balancing during a charging operation in the charging system (100, 200) the electrical loads of the charging stations (104, 108, 112, 204, 208, 212) based on the ID responses (134, 135, 136, 234, 235, 236) received by the main controller (125).
